# EUROPEAN PATENT APPLICATION

(11) **EP 4 760 540 A1**
(43) Date of publication of application: **17.06.2026**
(21) Application number: 25221809.4
(22) Date of filing: 09.12.2025
(51) Int. Cl.: G06F 16/783, G06F 16/78, G06N 20/00

(54) **SYSTEM AND METHOD FOR MODEL AND FEATURE MONITORING**

(30) Priority: 13.12.2024 US 202418980148
(71) Applicant: Google LLC, Mountain View, CA 94043 (US)
(72) Inventor: ZHAO, Yinguang, Mountain View, California, 94043 (US); YANG, Bo, Mountain View, California, 94043 (US); LIU, Jiashang, Mountain View, California, 94043 (US); CHENG, Xi, Mountain View, California, 94043 (US); QI, Haiyang, Mountain View, California, 94043 (US); GUO, Fangyu, Mountain View, California, 94043 (US)
(74) Representative: Betten & Resch

(57) **Abstract**

This system and method described herein provide for efficient monitoring of machine learning models in a data warehouse toolset integrated with a cloud platform. Computation of statistics and anomalies for training data and serving data for the machine learning models may be distributed across physical shards in the data warehouse. Computed results may be converted to a format compatible with external platforms. Model monitoring may be supported using table valued functions (TVFs) to compute descriptive statistics of data and to compute the feature distribution difference between two different pieces of data, a scalar function to validate statistics, and an internal task handler to parse monitoring statistics results and save it as a job to make it visualizable.

## Description

### BACKGROUND

Enterprise data warehouses, such as BigQuery^{®}, are used in cloud computing, allowing users to analyze large amounts of data in near real time. Some cloud tools, such as BigQuery ML, may allow users to create and run machine learning models in the enterprise data warehouse using structured query language (SQL) queries. For example, the machine learning models may be stored in the data warehouse as datasets, similar to tables and views. Users can access the cloud tool to train and inference the machine learning models using standard SQL queries.

Machine learning platforms, such as Vertex AI^{™}, can be used by developers and data scientists to build, train, and deploy artificial intelligence (AI) models and applications. They also allow users to customize large language models (LLMs) for AI-powered applications.

TensorFlow^{®} Data Validation (TFDV) is a library for exploring and validating machine learning data. It uses L-infinity distance for categorical features and approximate Jensen-Shannon divergence for numeric features. It includes application programming interfaces (APIs) that generate statistics for the datasets and validates data skew or data drift.

Data drift in machine learning models can significantly impact results. While some monitoring solutions currently exist, such solutions can struggle with large datasets, resulting in prolonged computation times. Moreover, transferring data for monitoring adds time and cost overhead.

### BRIEF SUMMARY

Aspects of the disclosure are directed to a scalable SQL data warehouse architecture that uses optimized query plans to distribute computation tasks across multiple physical shards within a data warehouse, achieving great scalability, eliminating the need for data movement, and reducing costs. The computed results conform to existing data validation formats, ensuring compatibility with external platforms, industry standard data validation libraries, and use cases beyond the data warehouse environment.

The system and method described herein supports model monitoring in the cloud tools used to create and run machine learning models in the enterprise data warehouse. The enterprise data warehouse is updated with one or more table-valued functions, scalar functions, and/or internal task handlers for the machine learning platform. A first table-valued function, referred to herein as data description function, computes descriptive statistics of data and provides a quick overview of the data. A second table-valued function, referred to herein as data validation function, computes the feature distribution difference between two difference pieces of data, or between one piece of data and one model that contains the training data statistics. According to some examples, results of the data description function and/or the data validation function may be output in a format compatible with existing protocol buffers, such as a Tensor Flow Data Validation format. The internal task handler is a pipeline task handler to parse monitoring statistics results of the machine learning platform. The task handler can be saved as a model monitoring job to make it visualizable. In some examples, the enterprise data warehouse may be integrated with a cloud platform having a model monitoring system, and the cloud platform may help to make results of the monitoring visualizable for a customer user. In other examples, all monitoring may be performed in the enterprise data warehouse, without involvement of the cloud platform.

The system and method described above align cloud tools of the enterprise data warehouse with the machine learning platform and other libraries. They further enable customers using the cloud tools in the data warehouse to detect training-serving data skew, detect previous serving-new serving data drift, and achieve model monitoring results. The system can be integrated with existing model monitoring tools, and to leverage features such as statistics visualization and historic result lookup. Monitoring may be performed on unstructured data based on an array function, which may be related to a text embedding function. Codebase cleanup is enabled for cases where statistics are needed.

The techniques described herein reduce the computation time for model monitoring, while maintaining compatibility with industry standard formats, such as data validation library formats. For example, computation time is reduced from approximately one hour using existing techniques to approximately two minutes using the techniques described herein.

One aspect of the disclosure provides a system for machine learning model monitoring, comprising one or more computing devices in a data warehouse. The one or more computing devices configured to compute descriptive statistics of training data for a machine learning model; compute descriptive statistics of serving data for the machine learning model; detect anomalies, using a monitoring function, based on the descriptive statistics for the training data and the descriptive statistics for the service data; and generate a report of the descriptive statistics for the training data, the descriptive statistics for the serving data, and the anomalies for output to a user interface.

Another aspect of the disclosure provides a method for machine learning model monitoring, comprising computing, by one or more computing devices in a data warehouse, descriptive statistics of training data for a machine learning model; computing, by the one or more computing devices in a data warehouse, descriptive statistics of serving data for the machine learning model; detecting, by the one or more computing devices in a data warehouse executing a monitoring function, anomalies based on the descriptive statistics for the training data and the descriptive statistics for the service data; and generating a report of the descriptive statistics for the training data, the descriptive statistics for the serving data, and the anomalies for output to a user interface.

In each of the system and method above, the monitoring function may include one of Jensen-Shannon divergence or L-infinity distance. The one or more computing devices may be configured to convert the descriptive statistics of the training data to a data validation format compatible with an industry standard data validation library; and convert the descriptive statistics of the serving data to a data validation format compatible with the industry standard data validation library. The one or more computing devices in the data warehouse may be further configured to compute a feature distribution between a first dataset and a second dataset. The first dataset may be the training data and the second dataset may be the serving data. In other examples, the first dataset may be serving data collected at a first time period and the second dataset may be serving data collected at a second time period later than the first time period.

According to some examples, computing the descriptive statistics may include executing a data description function. Computation of the descriptive statistics and detection of anomalies may be distributed across multiple computing devices.

In some examples, the one or more computing devices in the data warehouse may be further configured to export the descriptive statistics for the training data, the descriptive statistics for the serving data, and the anomalies to a centralized model monitoring system of an integrated cloud platform. One or more cloud computing devices in the integrated cloud platform model monitoring system integrated with the data warehouse may be configured to parse the training data statistics, serving data statistics, and anomalies received from the data warehouse; and store the parsed data as a job. The one or more cloud computing devices may be configured to monitor data skew using the parsed data.

### BRIEF DESCRIPTION OF THE DRAWINGS

FIG. 1 is a block diagram of an example implementation of a centralized model monitoring system integrated with a data warehouse, according to aspects of the disclosure.
Fig. 2 is a flow diagram illustrating operations of the system of Fig. 1, according to aspects of the disclosure.
Fig. 3 is a flow diagram illustrating example operations of a table-valued function according to aspects of the disclosure.
Fig. 4 is a block diagram illustrating an example architecture for computing data skew and data drift, according to aspects of the disclosure.
Fig. 5 is a block diagram illustrating another example architecture for computing data skew and data drift, according to aspects of the disclosure.
Fig. 6 is a block diagram illustrating another example architecture for computing data skew and data drift, according to aspects of the disclosure.
FIG. 7 is a block diagram of an example computing environment implementing the database management system, according to aspects of the disclosure.
Fig. 8 is a flow diagram illustrating an example method of machine learning model monitoring according to aspects of the disclosure.

### DETAILED DESCRIPTION

This system and method described herein provide for efficient monitoring of machine learning models in a data warehouse toolset integrated with a cloud platform. Computation of statistics and anomalies for training data and serving data for the machine learning models may be distributed across physical shards in the data warehouse. Computed results may be converted to a format compatible with external platforms. Model monitoring may be supported using table valued functions (TVFs) to compute descriptive statistics of data and to compute the feature distribution difference between two different pieces of data, a scalar function to validate statistics, and an internal task handler to parse monitoring statistics results and save it as a job to make it visualizable.

This system and method described herein leverage a scalable SQL data warehouse infrastructure. Key monitoring algorithms, such as Jensen-Shannon divergence and L-infinity distance, are implemented using optimized query plans. The execution plan undergoes multiple rounds of optimization for superior logical performance. Computation tasks are distributed across multiple physical shards within the data warehouse, achieving great scalability, eliminating the need for data movement and reducing input/output costs. The computed results may conform to existing data validation protocol formats, ensuring compatibility with external platforms and use cases beyond the data warehouse environment.

Optimizing the query plans may be performed in several rounds, and may include parsing the query plan into smaller computations. This optimization may include cache optimization that the same data is reused for computation of different statistics, thereby avoiding input/output costs for a large dataset. In some cases, there may be more than one algorithm for one structured query language (SQL) computation. In such cases, the algorithms with better scalability and performance can be selected. The data warehouse may have an upper limit of complexity for SQL query plans. To simplify the query plan when computing ~9000 features, the query plan may be optimized to first compute all statistics for all features in a single row. Then those statistics are pivoted into different rows for different features. This keeps the query plan complexity a constant, which doesn't increase as feature number increases. Unique computations may be identified and/or redundant computations may be identified. In this regard, the query plan can be reduced to the unique computations. By reusing computations, and skipping computations that are not needed, time and computing resources are saved.

The computation tasks may be distributed across physical shards in the data warehouse. Computed results may be converted to a format compatible with external platforms, an industry standard data validation libraries, and use cases beyond the data warehouse environment.

Model monitoring may be supported in the data warehouse toolset using table valued functions (TVFs), a scalar function, and an internal task handler. The TVFs may be executed to compute descriptive statistics of data and provide a quick overview of the data, and to compute the feature distribution difference between two different pieces of data, or between one piece of data and one model which contains the training data statistics. The scalar function may take two statistics and call an application programming interface (API) to validate statistics. The task handler may be a pipeline task handler to parse monitoring statistics results and save it as a job to make it visualizable.

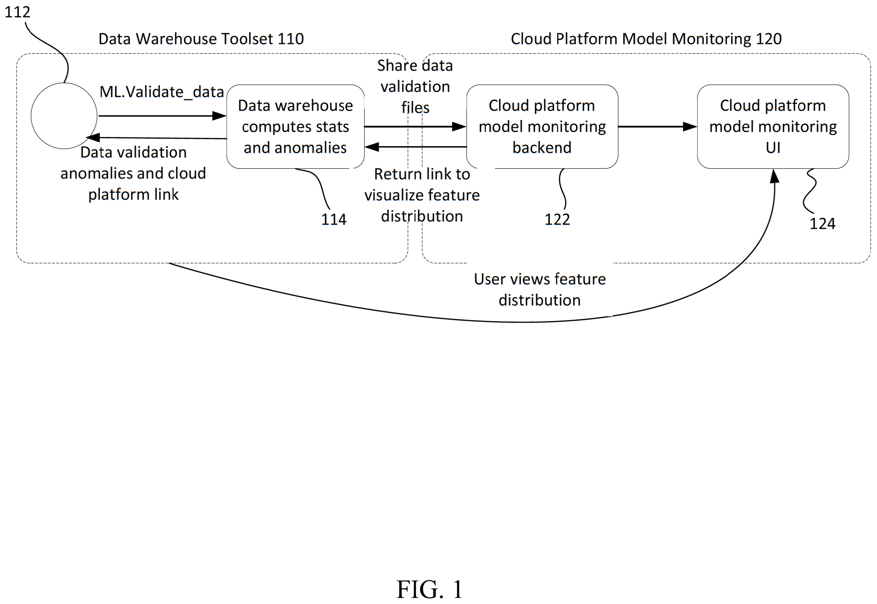

Fig. 1 illustrates an example implementation of a centralized model monitoring system integrated with the data warehouse to improve scalability and performance of the cloud platform.

As shown in Fig. 1, data warehouse toolset 110 is integrated with cloud platform model monitoring engine 120. User 112 utilizes the data warehouse toolset 110, such as for training and serving machine learning models in the data warehouse. Data warehouse compute unit 114 computes statistics and anomalies. For example, user 112 may use a data validation table valued function, which computes a feature distribution difference between two different datasets, or between a dataset and a model which contains training data statistics. The data warehouse compute unit 114 computes the statistics and anomalies for the two different dataset or the dataset and model, and shares data validation files with cloud platform centralized model monitoring backend 122. The backend 122 implements a task handler to parse the statistics from the data warehouse compute engine 114 and save it as a model monitoring job to make it visualizable. The backend 112 shares the job with cloud platform model monitoring user interface 124, which provides visual output depicting the model monitoring job to the user 112.

The centralized model monitoring backend 122 and user interface 124, collectively referred to as the centralized model monitoring system, allows users to constantly track and evaluate the performance of their machine learning models once deployed, ensuring they maintain high accuracy and reliability over time by identifying potential issues and triggering alerts when performance metrics deviate from expected standards. It continuously monitors key metrics like accuracy, precision, recall, and bias of deployed models to identify potential degradation in performance. When performance metrics fall below predefined thresholds, the system generates alerts to notify users about potential issues that need attention. With regard to data drift detection, it can identify changes in the data distribution that could impact model performance, allowing for proactive adjustments. In some cases, the system can automatically trigger actions to address performance issues, such as retraining models with updated data.

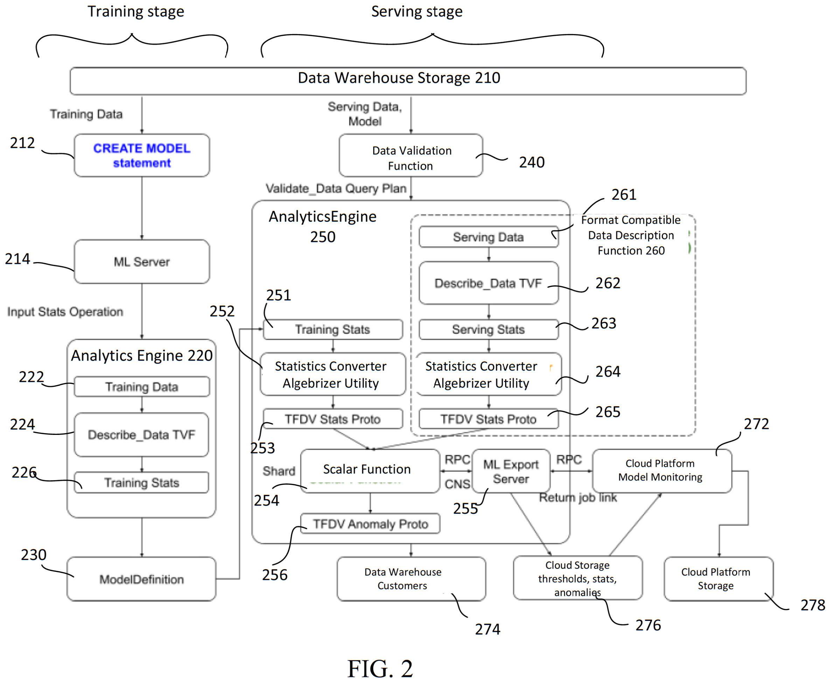

Fig. 2 illustrates in more detail the operations of the centralized model monitoring system. The centralized model monitoring system monitors for data skew and data drift during a training stage. When the user inputs data, the data has multiple different features. Model monitoring can include monitoring for data drift and data skew. Drift is comparing two serving data collected at different times. Data skew is comparing serving data against. training data. New data can contain, for example, a plurality of new features. By comparing the serving data to the training data, the new features can be identified. Accordingly, statistics can be computed only for the new features, thereby reducing the time and computing resources needed for the computation.

A customer user of data warehouse storage 210 sends training data and a create model statement 212 to the data warehouse. The create model statement 212 may be a command to create a machine learning model based on the training data. Inside the data warehouse, the statement may be routed to a machine learning (ML) server 214 that handles all ML-related requests. The ML server 214 may collect statistics of the training data and provide them to an analytics engine 220. For example, the ML server 214 may send multiple SQLs to the analytics engine 220 for executing the queries. The analytics engine 220 uses training data 222 to execute a data description table valued function 224. The data description function 224 computes descriptive statistics of data and provides a quick overview of the data. The data description function 224 outputs training statistics 226 that can be converted to an existing data validation protocol and then used for model monitoring and feature store monitoring. Once the model is trained, the training statistics 226 output by the analytics engine 220 is saved to model definition 230, which may be metadata.

During a serving stage, the customer initiates the ML monitoring functionality. For example, the user may enter a request to execute data validation function 240. Data validation function 240 may compute a feature distribution difference between two different data. For example, data skew may be detected by comparing training data to serving data. In other examples, a prior data set may be compared to a later data set, such as by comparing last week's data to this week's data. In some examples, a validate statistics API may be used, utilizing L-infinity distance for categorical features and approximate Jensen-Shannon divergence for numeric features. In some cases, the statistics, thresholds, and validation results may be shared with cloud platform model monitoring.

One example parameter for data drift detection is baseline. Example baselines may include model name, base table name, and base query statement. Model name may be used for model monitoring after the model is trained. Base table name and Base query statement may be used for data monitoring before the model is trained. An example implementation includes:

```
      // Data skew
      Data_Validation_Function_Skew(
      MODEL model_name,
      {TABLE table_name | (query _statement)}
      [, STRUCT<default_threshold FLOAT64,
                 thresholds ARRAY<STRUCT<col_name STRING, threshold
                 FLOAT64>>, excluded_cols ARRAY<STRING>>]
      )
      // Data drift
      Data_Validation_Function_Drift(
      {TABLE base_table_name | (base_query_statement)}
      {TABLE table_name | (query _statement)}
      [, STRUCT<default_threshold FLOAT64,
                 thresholds ARRAY<STRUCT<col_name STRING, threshold
                 FLOAT64>>, excluded_cols ARRAY<STRING>>,
           MODEL model_name]
      )
```

Once the request to execute data validation function 240 is received, analytics engine 250 may read all training statistics 251 from the model definition 230. These training statistics 251 may be the same as the training statistics 226. Similarly, analytics engine 250 may be the same as analytics engine 220. Data validation converter 252 may convert the basic statistics to an algorithm, such as a Jensen Shannon algorithm. Such conversion may include, packaging, processing, etc. such that resulting statistics 253 are compatible with libraries outside of the data warehouse.

New serving data 261 may be provided by hardware. The data description function 262, similar to the data description function 224 described above, may be used to compute descriptive statistics for the serving data 261 and to provide a quick overview of the serving data 261. The data description function 262 outputs serving statistics 263 that can be converted by converter 264 to Jensen Shannon or another algorithm. Resulting statistics 265 may be compatible with other library outside the data warehouse.

The resulting training statistics 253 and the resulting serving statistics 265 may be provided to a validation scalar function 254. This validation scalar function 254 may take the statistics and finish the last few computations for algorithms to determine which feature has an anomaly and which does not. The result may be stored in anomaly protocol buffer 256 and returned to the data warehouse customers 274. The result may also be transmitted to ML export server 255, such as through remote procedure call (RPC) and/or converged network system (CNS). The ML export server 255 may perform anomaly computation with a data validation library. The ML export server 255 provides the result to cloud platform model monitoring server 272. Results of the cloud platform model monitoring may be stored in cloud platform storage 278.

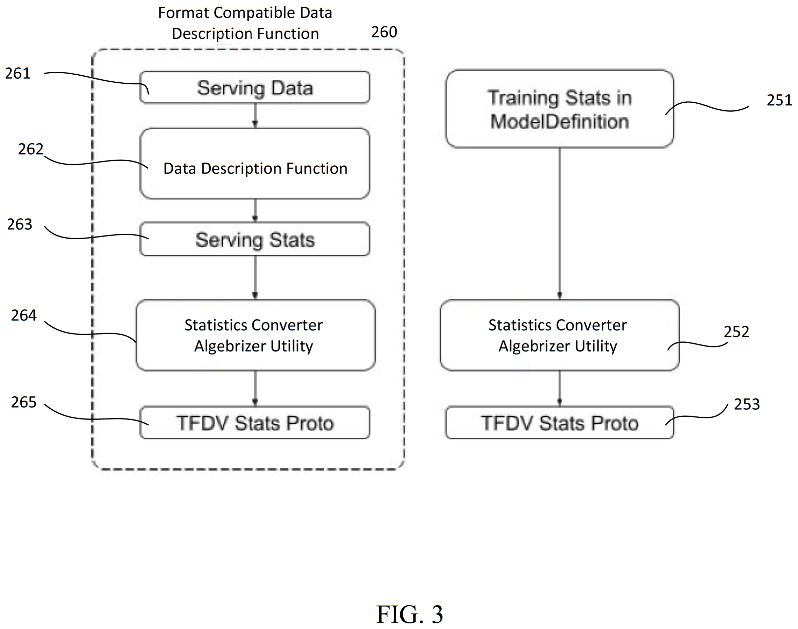

Fig. 3 illustrates an example of validation library compatible description function 260. This function 260 may be a user-facing function that, given a data table or query, generates data validations in a dataset feature statistics list protocol buffer. For example, serving data 261 is provided. The validation library compatible description function 260 may call the Describe-Data function 262 to generate serving statistics 263. According to some examples, parameters may be set to define a number of buckets, quantiles of buckets, values of buckets, rank of buckets, an array length, a number of columns, table name, query statement, or any other parameters for the statistics. Algebrizer utility 264 converts the serving statistics 263 to a format that can be leveraged in SQL, such as feature store monitoring. The converted statistics may be stored in statistics protocol buffer 265.

Similar to conversion of the serving statistics 263 using the algebrizer utility 264, training statistics 251 may be converted to a format for access outside of the data warehouse and stored in a data validation protocol buffer 253. In some examples, the algebrizer utility 264 may be the same computing unit as the algebrizer utility 252. An example implementation of simplified converter query logic includes:

```
 SELECT
      ARRAY_AGG(
           STRUCT(
                 field_name AS name,
                 STRUCT(
                      STRUCT(num_non_missing) AS common_stats,
                      mean) AS num_stats,
                 STRUCT(
                      STRUCT(num_non_missing) AS common_stats,
                      avg_length) AS string_stats
     )) AS features
     FROM DescribeResults
```

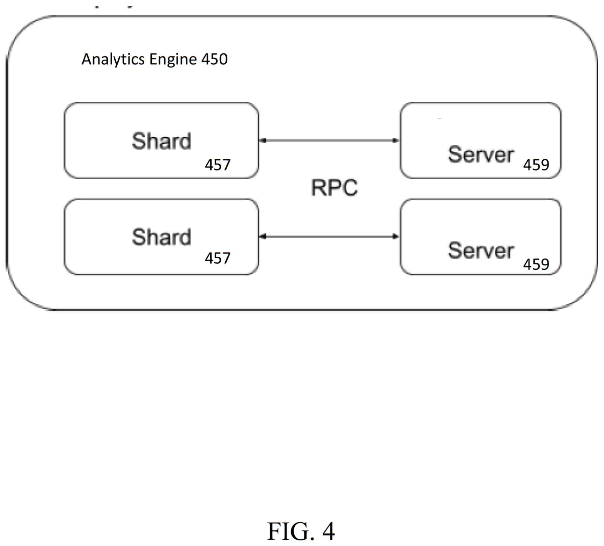

Figs. 4-6 illustrate example implementations of an architecture for computing data skew and data drift. In such computation, one row may be computed as baseline data feature statistics list plus new data feature statistics list to identify anomalies as a result. A shard of the analytics engine 250 of Fig. 2 communicates with ML export server 255 of Fig. 2, which performs the anomaly computation with the data validation library. It should be understood that these are merely example implementations, and that any of a variety of implementations is possible. For example, some implementations may omit integration of the cloud platform, and therefore may also omit components such as an export server.

As shown in Fig. 4, each shard 457 of analytics engine 450 brings up a server 459 wrapping a data validation library on the same machine. The shards 457 may communicate with the servers 459 through RPC or other communication methods. By using the data validation library, the implementation may align with the centralized model monitoring of the cloud platform. Moreover, this implementation is scalable to accommodate computations for numerous rows.

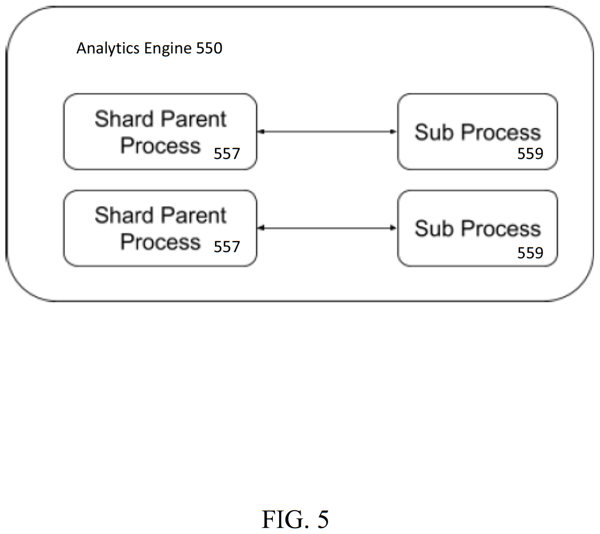

As shown in the implementation of Fig. 5, each shard 557 of analytics engine 550 brings up a subprocess 559 wrapping the data validation library on the same machine. Similar to the implementation of Fig. 4, this provides a scalable architecture that aligns with the cloud platform monitoring system.

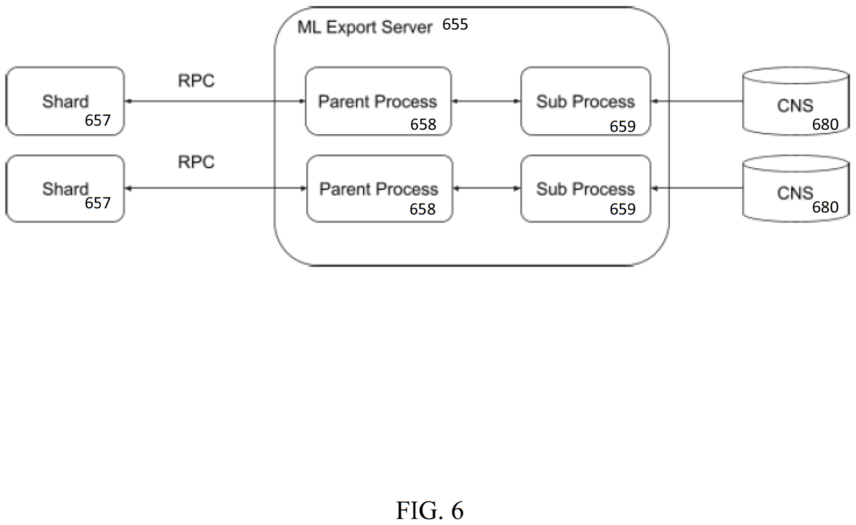

Fig. 6 illustrates an implementation in which each shard 657 of the analytics engine sends an RPC to a parent process 658 of ML Export server 655. The parent process 658 brings up a subprocess 659 wrapping the data validation library. The ML Export server 655 reads data from cloud native storage (CNS) 680.

While several example implementations are described above, it should be understood that further examples are possible. For example, underlying separate coding functions of the data validation can be utilized.

Returning to Fig. 1, integration of the data warehouse toolset 110 with cloud platform model monitoring 120 may include inter-service communication, resource sharing, and error handling. The data warehouse toolset 110 may utilize RPCs and cloud storage to share statistics and anomalies with the cloud platform model monitoring 120. Involved resources of the cloud platform model monitoring 120 may include a model, model monitor, and model monitoring job. The model may be a data warehouse toolset model registered as a cloud platform model monitoring model. Each result uploaded by the data warehouse toolset 110 may be saved as a model monitoring job. The model monitoring job may have an associated identifier, and users can retrieve or visualize the result using the associated identifier. The model monitor may be a parent resource of the model monitoring job.

Referring back to Fig. 2, in executing a validation library compatible validation function 254, the ML export server 255 sends requests to the cloud platform model monitoring to start sharing the monitoring results. For example, the cloud platform model monitoring may expose and internal API to allow the data warehouse toolset to upload monitoring results. An RPC request from the data warehouse toolset may include all information required to create a model monitoring job, and a response from the cloud platform model monitoring may include enough information to generate a direct link for visualization.

In executing the validation library compatible validation function 254, the ML export server 255 will also share training data statistics, serving data statistics, and anomalies with the cloud platform model monitoring. The results may be shared in a stackable and scalable manner. For example, statistics and anomalies may be written into the body of an RPC request. As another example, the statistics and anomalies may be saved into a cloud storage bucket, and an identifier for the cloud storage bucket may be provided in the body of the RPC request.

Training data statistics may not change in each monitoring run for a given model. Accordingly, in some examples the training data may be uploaded only once for each model version. In this regard, the data warehouse tool can share the training data statistics in a model training phase, and the cloud platform model monitoring can save the training data statistics under a target model monitor resource. To share serving statistics and anomalies, the data warehouse toolset and the cloud platform model monitoring may agree on file formats.

In the cloud platform model monitoring 120 of Fig. 1, some components may support the integration with the data warehouse toolset 110. For example, a cloud platform model monitoring API may include fields for creating a job request, allowing the data warehouse toolset 110 to provide all required information. In each successful RPC, a response body may identify a newly created model monitoring job resources name. The data warehouse toolset 110 can use the resource name to derive a direct address to a page having the monitoring statistics visualization. Another example component supporting the integration includes a centralized model monitoring pipeline. The pipeline may handle the uploading of results. The pipeline may include creating a project mapping, importing a payload with monitoring results, reporting job metrics, and creating a finalized model monitoring payload.

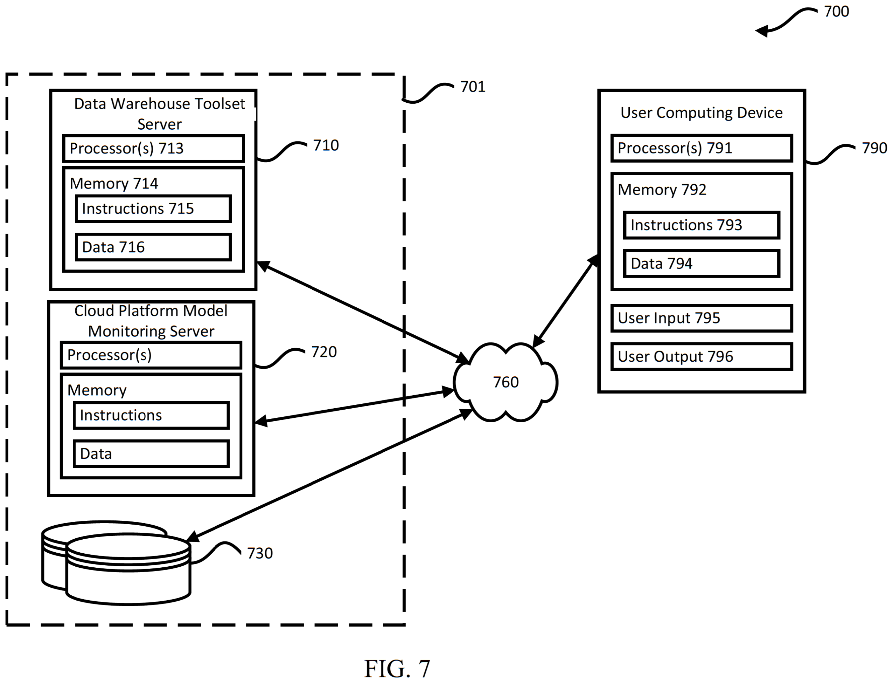

FIG. 7 is a block diagram of an example computing environment 700 implementing the centralized model monitoring system formed by integrating the data warehouse toolset and the cloud platform model monitoring, according to aspects of the disclosure.

The centralized model monitoring system can be implemented on one or more devices having one or more processors in one or more locations, such as in data warehouse toolset server 710 and cloud platform model monitoring server 720. User computing device 790 and the server computing devices 710, 720 can be communicatively coupled to one or more storage device(s) 730 over a network 760. The server computing devices 710, 720 and storage device(s) 730 can form part of a computing platform 701. The computing platform 701 can be a cloud computing platform, offering a variety of different services, for example for providing compute and storage resources to users of the platform.

The storage device(s) 730 can be a combination of volatile and non-volatile memory and can be at the same or different physical locations than the computing devices 710, 720, 790. For example, the storage device(s) 730 can include any type of non-transitory computer readable medium capable of storing information, such as a hard-drive, solid state drive, tape drive, optical storage, memory card, ROM, RAM, DVD, CD-ROM, write-capable, and read-only memories.

Each server computing device 710, 720 can include one or more processors 713 and memory 714. The memory 714 can store information accessible by the processor(s) 713, including instructions 715 that can be executed by the processor(s) 713. The memory 714 can also include data 716 that can be retrieved, manipulated, or stored by the processor(s) 713. The memory 714 can be a type of non-transitory computer readable medium capable of storing information accessible by the processor(s) 713, such as volatile and non-volatile memory. The processor(s) 713 can include one or more central processing units (CPUs), graphic processing units (GPUs), field-programmable gate arrays (FPGAs), and/or application-specific integrated circuits (ASICs), such as tensor processing units (TPUs).

The instructions 715 can include one or more instructions that when executed by the processor(s) 713, cause the one or more processors to perform actions defined by the instructions. The instructions 715 can be stored in object code format for direct processing by the processor(s) 713, or in other formats including interpretable scripts or collections of independent source code modules that are interpreted on demand or compiled in advance. The instructions 715 can include instructions for implementing the system 100 consistent with aspects of this disclosure. The system 700 can be executed using the processor(s) 713, and/or using other processors remotely located from the server computing device 715.

The data 716 can be retrieved, stored, or modified by the processor(s) 713 in accordance with the instructions 715. The data 716 can be stored in computer registers, in a relational or non-relational database as a table having a plurality of different fields and records, or as JSON, YAML, proto, or XML documents. The data 716 can also be formatted in a computer-readable format such as, but not limited to, binary values, ASCII, or Unicode. Moreover, the data 716 can include information sufficient to identify relevant information, such as numbers, descriptive text, proprietary codes, pointers, references to data stored in other memories, including other network locations, or information that is used by a function to calculate relevant data.

The user computing device 790 can also be configured similar to the server computing device 1615, with one or more processors 791, memory 792, instructions 793, and data 794. The user computing device 790 can also include a user output 796, and a user input 795. The user input 795 can include any appropriate mechanism or technique for receiving input from a user, such as keyboard, mouse, mechanical actuators, soft actuators, touchscreens, microphones, and sensors.

The server computing devices 710, 720 can be configured to transmit data to the user computing device 790, and the user computing device 790 can be configured to display at least a portion of the received data on a display implemented as part of the user output 796. The user output 796 can also be used for displaying an interface between the user computing device 790 and the server computing devices 710, 720. The user output 796 can alternatively or additionally include one or more speakers, transducers or other audio outputs, a haptic interface or other tactile feedback that provides non-visual and non-audible information to the platform user of the user computing device 790.

Although FIG. 7 illustrates the processors and the memories as being within the respective computing devices, components described in this specification, including the processors and the memories can include multiple processors and memories that can operate in different physical locations and not within the same computing device. For example, some of the instructions and the data can be stored on a removable SD card and others within a read-only computer chip. Some or all of the instructions and data can be stored in a location physically remote from, yet still accessible by, the processors. Similarly, the processors can include a collection of processors that can perform concurrent and/or sequential operation. The computing devices can each include one or more internal clocks providing timing information, which can be used for time measurement for operations and programs run by the computing devices.

The server computing devices 710, 720 can be configured to receive requests to process data from the user computing device 790. For example, the environment 700 can be part of a computing platform configured to provide a variety of services to users, through various user interfaces and/or APIs exposing the platform services. One or more services can be a machine learning framework or a set of tools for generating neural networks or other machine learning models according to a specified task and training data. The user computing device 790 may receive and transmit data specifying target computing resources to be allocated for executing a neural network trained to perform a particular neural network task.

The user device 790 and the platform 701 and components therein can be capable of direct and indirect communication over the network 760. The devices can set up listening sockets that may accept an initiating connection for sending and receiving information. The network 760 itself can include various configurations and protocols including the Internet, World Wide Web, intranets, virtual private networks, wide area networks, local networks, and private networks using communication protocols proprietary to one or more companies. The network 760 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 760, in addition or alternatively, can also support wired connections between the devices, including over various types of Ethernet connection.

Although a single data warehouse toolset server 710, cloud platform model monitoring server 720, and user computing device 790 are shown in FIG. 7, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

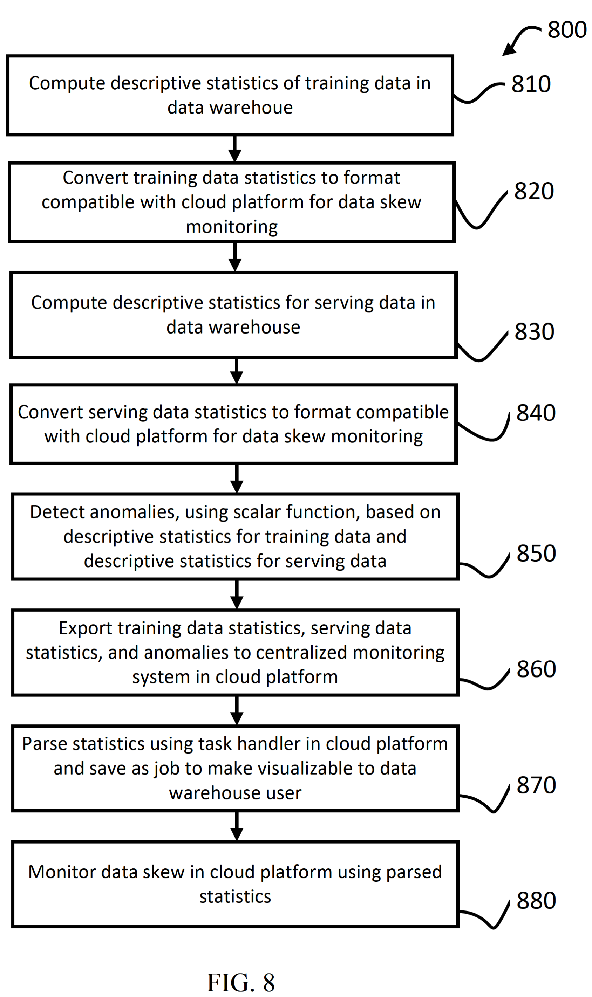

Fig 8 illustrates an example method of monitoring machine learning models. The method may be executed using an integration of data warehouse computing devices with cloud platform computing devices. While operations are described in a particular order, it should be understood that the order may be modified and that some operations may be performed partially or wholly in parallel. Moreover, operations may be added or omitted.

In block 810, descriptive statistics of training data for a machine learning model are computed in a data warehouse. For example, a function such as the data description function discussed above may be executed in the data warehouse. Example statistics may include a number of quantiles for numerical columns, a number of buckets for an array length, a number of most frequent categories and its frequency for string columns, etc.

In block 820, the training data statistics may be converted to a format that is compatible with the cloud platform for data skew monitoring. For example, the training data statistics may be converted to a data validation format.

In block 830, descriptive statistics for serving data are computed in the data warehouse. For example, the data description function may be applied to serving data for the machine learning model. In some examples, the statistics may correspond to those computed for the training data for the model.

In block 840, the serving data statistics may be converted to a format compatible with the cloud platform for data skew monitoring. For example, similar to the training data statistics, the serving data statistics may be converted to a data validation format.

In block 850, anomalies are detected based on the descriptive statistics for the training data and the descriptive statistics for the serving data. For example, the anomalies may be detected by executing a scalar function in the data warehouse. According to some examples, results of the anomaly detection may be provided through a SQL interface in the data warehouse. For example, for each of a variety of features, the results can indicate a type of metric and the computed metric, and may flag whether the feature was detected to be anomalous or not.

In block 860, the training data statistics, serving data statistics, and anomalies may optionally be exported to a centralized monitoring system in a cloud platform integrated with the data warehouse.

In block 870, the centralized monitoring system in the cloud platform parses the statistics and saves them as a job to make them visualizable to a data warehouse user. For example, the centralized monitoring system may execute a pipeline task handler to parse the results and make them visualizable. The parsed statistics may be stored as a job, thereby making it possible for a user to view historical results, and to compare data distributions by visually distribution histogram overlap.

In block 880, the centralized model monitoring system monitors data skew in the cloud platform using the parsed statistics.

Aspects of this disclosure can be implemented in digital circuits, computer-readable storage media, as one or more computer programs, or a combination of one or more of the foregoing. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

While operations shown in the drawings and recited in the claims are shown in a particular order, it is understood that the operations can be performed in different orders than shown, and that some operations can be omitted, performed more than once, and/or be performed in parallel with other operations. Further, the separation of different system components configured for performing different operations should not be understood as requiring the components to be separated. The components, modules, programs, and engines described can be integrated together as a single system or be part of multiple systems.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for machine learning model monitoring, comprising:
one or more computing devices in a data warehouse, the one or more computing devices configured to:
compute descriptive statistics of training data for a machine learning model;
compute descriptive statistics of serving data for the machine learning model;
detect anomalies, using a monitoring function, based on the descriptive statistics for the training data and the descriptive statistics for the serving data; and
generate a report of the descriptive statistics for the training data, the descriptive statistics for the serving data, and the anomalies for output to a user interface.

2. The system of claim 1, wherein the one or more computing devices are configured to:
convert the descriptive statistics of the training data to a data validation format compatible with an industry standard data validation library; and
convert the descriptive statistics of the serving data to a data validation format compatible with the industry standard data validation library.

3. The system of claim 1 or claim 2, wherein the one or more computing devices in the data warehouse are configured to compute a feature distribution between a first dataset and a second dataset.

4. The system of claim 3, wherein the first dataset comprises the training data and the second dataset comprises the serving data; or
wherein the first dataset comprises serving data collected at a first time period and the second dataset comprises serving data collected at a second time period later than the first time period.

5. The system of any one of claims 1 to 4, wherein computing the descriptive statistics comprises executing a data description function; and/or
wherein computation of the descriptive statistics and detection of anomalies is distributed across multiple computing devices; and/or
wherein the monitoring function comprises one of Jensen-Shannon divergence or L-infinity distance.

6. The system of any one of claims 1 to 5, wherein the one or more computing devices in the data warehouse are further configured to export the descriptive statistics for the training data, the descriptive statistics for the serving data, and the anomalies to a centralized model monitoring system of an integrated cloud platform; and
wherein the system further comprises one or more cloud computing devices in the integrated cloud platform model monitoring system integrated with the data warehouse, the one or more cloud computing devices configured to:
parse the training data statistics, serving data statistics, and anomalies received from the data warehouse; and
store the parsed data as a job.

7. The system of claim 6, wherein the one or more cloud computing devices are configured to monitor data skew using the parsed data.

8. A method for machine learning model monitoring, comprising:
computing, by one or more computing devices in a data warehouse, descriptive statistics of training data for a machine learning model;
computing, by the one or more computing devices in a data warehouse, descriptive statistics of serving data for the machine learning model;
detecting, by the one or more computing devices in a data warehouse executing a monitoring function, anomalies based on the descriptive statistics for the training data and the descriptive statistics for the serving data; and
generating a report of the descriptive statistics for the training data, the descriptive statistics for the serving data, and the anomalies for output to a user interface.

9. The method of claim 8, further comprising:
converting, by the one or more computing devices in a data warehouse, the descriptive statistics of the training data to a data validation format compatible with an industry standard data validation library; and
converting, by the one or more computing devices in a data warehouse, the descriptive statistics of the serving data to a data validation format compatible with the industry standard data validation library.

10. The method of claim 8 or claim 9, further comprising computing, by the one or more computing devices in a data warehouse, a feature distribution between a first dataset and a second dataset.

11. The method of claim 10, wherein the first dataset comprises the training data and the second dataset comprises the serving data; or
wherein the first dataset comprises serving data collected at a first time period and the second dataset comprises serving data collected at a second time period later than the first time period.

12. The method of any one of claims 8 to 11, wherein computing the descriptive statistics comprises executing a data description function; and/or
wherein computation of the descriptive statistics and detection of anomalies is distributed across multiple computing devices; and/or
wherein the monitoring function comprises one of Jensen-Shannon divergence or L-infinity distance.

13. The method of any one of claims 8 to 12, further comprising:
export the descriptive statistics for the training data, the descriptive statistics for the serving data, and the anomalies to a centralized model monitoring system of an integrated cloud platform; and
parsing, by one or more cloud computing devices in the integrated cloud platform model monitoring system integrated with the data warehouse, the training data statistics, serving data statistics, and anomalies received from the data warehouse; and
storing the parsed data as a job.

14. The method of claim 13, further comprising monitoring, by the one or more cloud computing devices in the cloud platform model monitoring system, data skew using the parsed data.

15. A computer program comprising instructions that, when executed by one or more processors, cause the one or more processors to perform the method of any one of claims 8 to 14.
